**Europäisches Patentamt**

**European Patent Office**

**Office européen des brevets**

(19)

(11) Numéro de publication : **0 177 404**
**B1**

(12) # FASCICULE DE BREVET EUROPÉEN

(45) Date de publication du fascicule du brevet :
**20.01.88**

(51) Int. Cl.⁴ : **B 60 H   1/00,** G 05 D 23/19

(21) Numéro de dépôt : **85401849.6**

(22) Date de dépôt : **23.09.85**

(54) **Procédé et dispositif de régulation de la température, en particulier dans l'habitacle d'un véhicule automobile.**

(30) Priorité : **02.10.84 FR 8415131**

(43) Date de publication de la demande :
**09.04.86 Bulletin 86/15**

(45) Mention de la délivrance du brevet :
**20.01.88 Bulletin 88/03**

(84) Etats contractants désignés :
**DE IT**

(56) Documents cités :
**EP-A- 0 060 510**
**FR-A- 2 492 069**

(73) Titulaire : **VALEO**
**64 Avenue de la Grande Armée**
**F-75017 Paris (FR)**

(72) Inventeur : **Brenier, Henri**
**8 bis, avenue Voltaire**
**F-78600 Maisons Lafitte (FR)**

(74) Mandataire : **Ramey, Daniel et al**
**Cabinet NETTER 40, rue Vignon**
**F-75009 Paris (FR)**

## Description

L'invention concerne un procédé et un dispositif de régulation de la température dans un espace déterminé, en particulier dans l'habitacle d'un véhicule automobile qui est chauffé ou climatisé par amenée d'air à température réglable.

Les moyens connus de régulation de la température dans un tel espace comprennent un moyen de mesure de la température interne de cet espace, un moyen d'affichage et de réglage d'une température de consigne choisie par l'utilisateur, des moyens de commande d'un organe de réglage de la température de l'air amené dans ledit espace, et un moyen de mesure de la température de cet air ou bien de détection de l'état ou de la position de l'organe de réglage.

Avec ces moyens connus, la régulation de la température dans ledit espace ou habitacle est réalisée par comparaison de la température interne de l'espace et de la température de consigne, production, à partir de leur différence, d'un signal représentant soit une température d'air amené dans l'espace, soit une position ou un état de l'organe de réglage de cette température, comparaison de cette température à la température réelle de l'air amené dans l'espace ou comparaison de cette position ou état de l'organe de réglage à la position ou l'état qu'il occupe à l'instant de la mesure et, à partir de cette comparaison, production d'un signal de commande modifiant la température de l'air amené dans l'espace d'une valeur·déterminée ou modifiant la position ou l'état de l'organe de réglage d'une quantité prédéterminée.

La présente invention a pour but de réaliser une régulation de température efficace et confortable tout en supprimant le moyen de mesure de la température de l'air amené dans l'espace ou le moyen de détection de la position ou de l'état de l'organe de réglage de cette température, dont la présence était indispensable dans la technique antérieure.

L'invention a pour objet un procédé et un dispositif de régulation de la température qui puissent être exécutés et réalisés par un microprocesseur disponible actuellement sur le marché à un prix relativement très faible.

Elle vise à cet effet, comme connu par FR-A-2 492 069, un procédé de régulation de la température dans un espace déterminé, en particulier dans l'habitacle d'un véhicule automobile, qui est chauffé ou climatisé par amenée d'air à température réglable, la température de cet air étant définie par un moyen de réglage recevant un signal de commande déterminé à partir de la température interne Ti dudit espace ou habitacle et d'une température de consigne Tc devant régner dans cet espace ou habitacle, procédé dans lequel, au cours d'un intervalle de temps prédéterminé,

- on mesure la température interne Ti dans ledit espace,

- on calcule la différence entre la température de consigne Tc et la température interne Ti,

- on calcule la variation réelle V2 de la température dans ledit espace depuis l'intervalle de temps précédent, par la différence Ti-Tip,

- on définit, à partir de cette variation, le signal de commande du moyen de réglage de la température de l'air amené dans ledit espace et on applique ce signal au moyen de réglage,

- et on répète ces opérations lorsque ledit intervalle de temps est écoulé.

Le procédé selon l'invention est caractérisé en ce que :

- on définit, à partir de la différence Ti-Tc et au moyen d'une loi de variation prédéterminée de la température, la variation souhaitable V1 de la température durant ledit intervalle de temps,

- on mesure la différence V1-V2,

- et on utilise cette différence pour établir, à l'aide d'une loi prédéterminée, le signal de commande qui représente le sens et la grandeur de l'action à exercer sur le moyen de réglage.

Le procédé de régulation selon l'invention est donc réalisable sans qu'il soit nécessaire de mesurer la température de l'air amené dans l'habitacle ou de déterminer la position ou l'état du moyen de réglage de cette température.

Selon une autre caractéristique de l'invention, on détermine la température interne dans l'espace en mesurant cette température plusieurs fois de suite pendant une fraction de l'intervalle de temps prédéterminé, et en calculant la valeur moyenne des températures mesurées pendant cette fraction d'intervalle de temps.

On obtient ainsi une mesure précise et fiable de la température interne dans ledit espace.

Selon encore une autre caractéristique de l'invention, applicable au cas où le moyen de réglage précité est déplaçable dans un sens et dans l'autre entre deux positions limites, on détermine l'arrivée de ce moyen de réglage dans l'une de ses positions limites et on donne une valeur nulle au signal de commande lorsque celui-ci aurait pour effet d'entraîner le moyen de réglage au-delà de cette position limite.

Ainsi, lorsque le moyen de réglage comprend un moteur électrique auquel est appliqué le signal de commande, on évite d'exciter pendant une période de temps qui peut être relativement longue ce moteur électrique lorsque son rotor est bloqué par l'arrivée du moyen de réglage dans une position limite.

Avantageusement, le signal de commande précité est un nombre entier, qui peut être positif, négatif ou nul, de signaux électriques impulsionnels, ou bien d'unités de temps représentant la durée d'un signal électrique de tension déterminée.

On peut ainsi commander, pas à pas, le déplacement ou le changement d'état du moyen de réglage de la température de l'air amené dans l'habitacle.

Par ailleurs, on peut également déterminer l'arrivée de ce moyen de réglage dans une position limite par comptage et addition des nombres entiers représentant les signaux de commande qui lui sont appliqués et par comparaison du total obtenu à un nombre entier correspondant à la course du moyen de réglage entre ses positions limites.

Selon une autre caractéristique de l'invention, le procédé consiste également, dans le cas où la valeur de consigne affichée est modifiée par l'utilisateur, à déterminer la différence entre la nouvelle et l'ancienne valeur de cette température de consigne, à déterminer à partir de cette différence un second signal de commande du moyen de réglage et à l'ajouter au signal de commande précité.

On peut ainsi prendre en compte les modifications de la température de consigne affichée par l'utilisateur, pour ralentir ou accélérer la régulation de la température à l'intérieur de l'espace précité.

L'invention propose également un dispositif pour l'exécution de ce procédé, conformément aux caractéristiques de la revendication 7.

Ce dispositif peut comprendre également des moyens de comptage et de totalisation des nombres entiers représentant les signaux de commande successifs et de comparaison de leur total à une valeur prédéterminée.

Ces moyens d'enregistrement, de comparaison, de calcul, de comptage et d'initialisation sont avantageusement constitués par un microprocesseur.

Ce microprocesseur reçoit en entrée un signal représentant la température de consigne et un signal représentant la température interne à réguler, et produit en sortie un signal de commande de la température de l'air amené dans ledit espace pour modifier sa température interne.

Une telle installation est plus simple, plus fiable et moins coûteuse que les installations utilisées dans la technique antérieure.

Dans la description qui suit, faite à titre d'exemple, on se réfère aux dessins annexés, dans lesquels :

- la figure 1 représente schématiquement, sous forme de blocs, un dispositif de régulation de température selon la technique antérieure ;

- la figure 2 représente schématiquement, sous forme de blocs, un dispositif de régulation selon l'invention ;

- la figure 3 est un organigramme des opérations exécutées dans le dispositif de la figure 2.

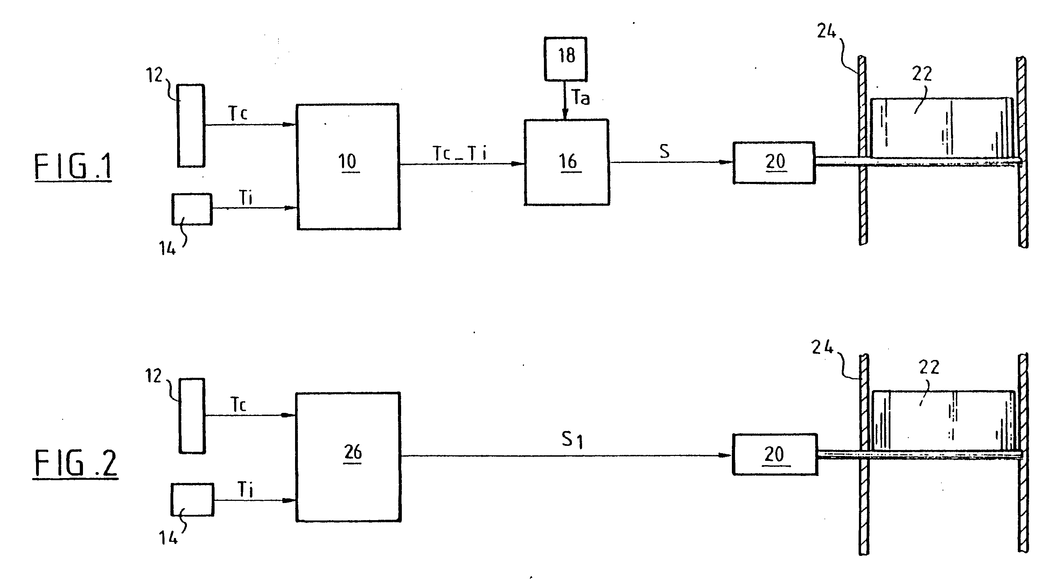

On se réfère d'abord à la figure 1, représentant un dispositif de régulation de température selon la technique antérieure.

Ce dispositif comprend un comparateur 10 dont une entrée reçoit un signal électrique Tc représentant la température de consigne affichée ou réglée par l'utilisateur sur un moyen tel qu'un potentiomètre 12 et qui reçoit sur une autre entrée un signal Ti produit par un capteur 14 de température et représentant la température interne d'un espace déterminé, par exemple l'habitacle d'un véhicule automobile.

Le comparateur produit en sortie un signal représentant la différence Tc-Ti qui est appliqué à une entrée d'un circuit intégré 16 dont une autre entrée reçoit un signal Ta produit par un capteur 18 dont la nature sera indiquée plus loin.

Le circuit intégré 16 produit en sortie un signal S de commande d'un moyen 20 de réglage de la température de l'air amené dans l'habitacle, ce moyen de réglage pouvant, dans l'exemple représenté, déplacer entre deux positions limites un volet 22 monté à rotation dans une chambre 24 de mélange d'un débit d'air froid et d'un débit d'air chaud de façon à déterminer, par sa position angulaire autour de son axe de rotation, la température du débit d'air qui est finalement amené dans l'habitacle du véhicule.

Le moyen de réglage 20 peut être un micromoteur à courant continu à collecteur, ou bien un micro-moteur à fonctionnement pas à pas, ou bien encore un vérin pneumatique associé à deux électrovannes d'alimentation en dépression et en air à pression atmosphérique, respectivement.

Le capteur 18 précité peut être un capteur de température mesurant la température de l'air amené dans l'habitacle, ou un potentiomètre de recopie associé au micro-moteur d'entraînement du volet 22 en rotation.

Comme indiqué plus haut, le circuit 16 détermine, en fonction de la différence Tc-Ti et du signal Ta (représentant la température de l'air amené dans l'habitacle ou la position réelle du volet 22), un signal S de commande du moyen de réglage 20, permettant de déplacer le volet 22 d'une quantité angulaire déterminée dans un sens déterminé, pour définir une nouvelle valeur de la température de l'air amené dans l'habitacle.

Bien entendu, le moyen de réglage de la température de l'air amené dans l'habitacle peut être autre qu'un volet de réglage du mélange de débits d'air chaud et d'air froid et, par exemple, un robinet de réglage de l'alimentation en fluide caloporteur d'un échangeur de chaleur faisant partie de l'installation de chauffage ou de climatisation du véhicule, un ventilateur à vitesse de rotation réglable, etc.

On se réfère maintenant à la figure 2 représentant schématiquement un dispositif de régulation de température selon l'invention.

Pour faciliter la comparaison avec le dispositif de la technique antérieure, on a représenté le dispositif selon l'invention associé au même moyen de réglage de la température de l'air amené dans l'habitacle, c'est-à-dire un volet de réglage 22 monté à rotation dans une chambre 24 de mélange de débits d'air chaud et d'air froid, et commandé en rotation par un moyen 20 tel qu'un micro-moteur ou un vérin pneumatique associé à deux électrovannes.

Le dispositif selon l'invention comprend, avantageusement, un microprocesseur 26 dont les entrées reçoivent le signal Tc de température de consigne produit par le potentiomètre 12 et le signal Ti produit par le capteur de température 14 et représentant la température interne de l'habitacle du véhicule. Ce microprocesseur 26 produit en sortie un signal S1 de commande du moyen 20 de réglage de la position angulaire du volet 22 dans la chambre 24.

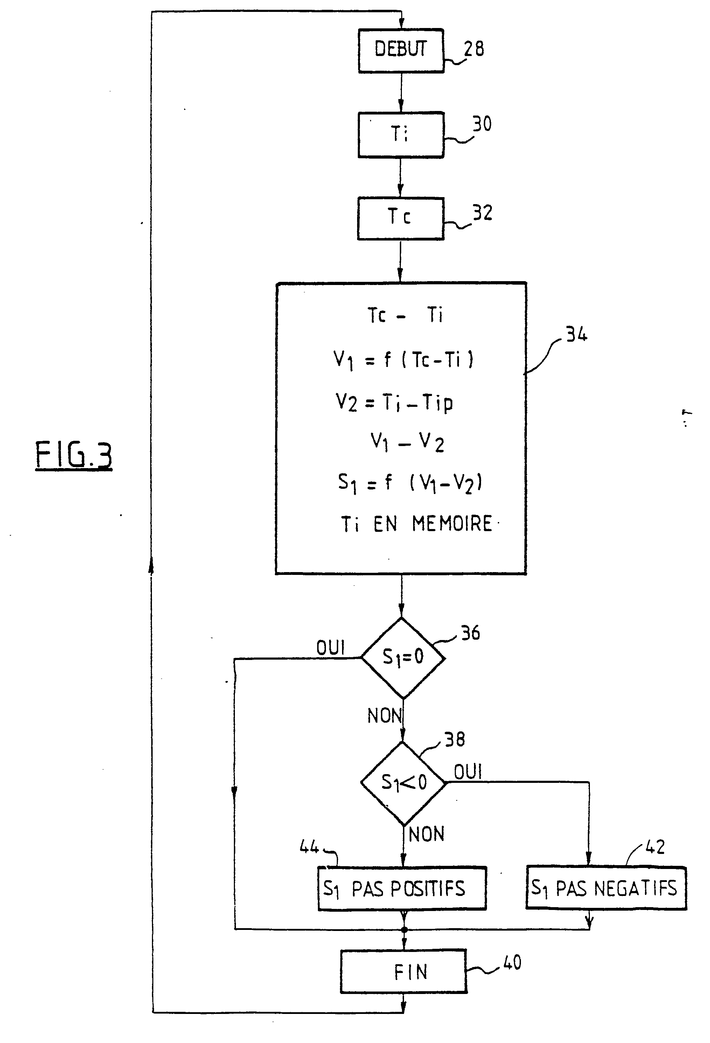

L'organigramme de la figure 3 représente schématiquement les étapes du procédé selon l'invention, et leur déroulement séquentiel.

La première étape 28 du procédé est une initialisation au début d'un cycle d'opérations se déroulant dans un intervalle de temps prédéterminé.

La seconde étape 30 du procédé consiste à mesurer la température interne dans l'habitacle et à produire le signal Ti représentant cette température interne.

Pour que cette mesure de température interne soit précise et fiable, l'invention prévoit de mesurer à plusieurs reprises la température interne, pendant une fraction de l'intervalle de temps prédéterminé correspondant à la durée totale du cycle, puis de calculer la valeur moyenne de ces mesures et de prendre en compte cette valeur moyenne comme valeur de la température interne.

L'étape suivante 32 du procédé consiste à lire en mémoire la valeur de la température de consigne Tc affichée par l'utilisateur, ou à relever la valeur de cette température de consigne.

Les opérations suivantes du procédé consistent, comme représenté schématiquement en 34 :
- à calculer la différence Tc-Ti,
- à déterminer à partir de cette différence et au moyen d'une loi prédéterminée, une variation souhaitable V1 de la température interne dans l'habitacle pendant la durée de l'intervalle de temps prédéterminé correspondant à la durée d'un cycle ;
- à lire en mémoire la valeur enregistrée de la température interne Tip mesurée au cours du cycle immédiatement précédent et à calculer la différence V2 = Ti-Tip représentant la variation réelle de la température interne depuis l'intervalle de temps précédent,
- à calculer la différence V1-V2 de la variation souhaitable et de la variation réelle de la température interne pendant la durée dudit intervalle de temps prédéterminé,
- à calculer à partir de cette différence et au moyen d'une loi prédéterminée, le signal S1 de commande de l'organe de réglage de la température interne,
- et à enregistrer en mémoire la valeur de la température interne Ti déterminée au cours de l'étape 30.

Ce signal S1 de commande est, de préférence, un nombre entier, qui peut être positif, négatif ou nul, et qui va représenter un nombre de signaux impulsionnels de commande d'un micro-moteur pas à pas, ou bien un nombre d'unités de temps représentant la durée d'un signal de commande d'un micro-moteur à courant continu à collecteur ou d'une électrovanne d'alimentation d'un vérin pneumatique en dépression ou en air atmosphérique.

Les étapes suivantes du procédé, représentées en 36 et 38, consistent à comparer le signal S1 à une valeur nulle et à vérifier s'il est, par exemple, inférieur à zéro.

Si le signal S1 est nul, l'opération suivante du procédé consiste à attendre la fin du cycle représentée en 40, c'est-à-dire la fin de l'intervalle de temps prédéterminé qui sépare l'étape 28 de début du cycle et l'étape 40 de fin de cycle. Si le signal S1 n'est pas nul, on vérifie, comme indiqué en 38, s'il est inférieur à zéro.

Si oui, l'étape suivante du procédé, indiquée en 42, consiste à faire tourner le volet 22 autour de son axe de S1 pas dans le sens négatif.

Si le nombre S1 est supérieur à zéro, l'opération suivante de procédé, indiquée en 44, consiste à faire tourner le volet 22 autour de son axe de S1 pas dans le sens positif de rotation.

L'opération suivante consiste à attendre la fin de cycle représentée en 40. Lorsque l'intervalle de temps prédéterminé est écoulé, le cycle est à nouveau initialisé et l'on retrouve l'étape 28 de début.

Pour fixer les idées, on indiquera à titre d'exemple, que la durée de l'intervalle prédéterminé ou durée d'un cycle est de l'ordre de 20 secondes. La durée de la détermination de la valeur Ti de la température interne peut prendre environ la moitié de ce cycle, soit dix secondes. On peut par exemple effectuer une mesure de la température interne toutes les secondes pendant ces dix secondes, puis calculer la valeur moyenne des dix mesures effectuées pour obtenir la valeur Ti.

Les opérations de calcul, d'enregistrement et de comparaison représentées en 34, 36 et 38 sont réalisées très rapidement, leur durée pouvant être considérée comme négligeable.

Le restant de l'intervalle de temps prédéterminé, soit les dix dernières secondes, est utilisé pour le déplacement du volet 22 de la quantité angulaire déterminée dans le sens positif ou négatif déterminé.

Lorsque le signal de commande S1 est un nombre entier, comme indiqué plus haut, le procédé selon l'invention consiste également à compter et totaliser les nombres entiers produits au cours des cycles successifs et à comparer leur total à un nombre déterminé correspondant au nombre de pas angulaires parcourus par le volet 22 d'une de ses positions limites à l'autre. Lorsque le total des nombres comptés et correspondant aux signaux de commande successifs est égal à ce nombre prédéterminé, on sait que le volet est nécessairement dans une de ses positions limites. Dans ce cas, le signal de commande suivant est rendu nul s'il a pour conséquence de déplacer le volet au-delà de cette position limite, et est pris en compte s'il a pour conséquence un déplacement du volet dans l'autre sens, c'est-à-dire vers l'autre position limite.

On évite ainsi, dans le cas où le déplacement du volet est réalisé par un micro-moteur électrique que ce moteur soit alimenté lorsque son rotor est bloqué par suite de l'arrivée du volet dans l'une de ses positions limites.

L'invention prévoit également d'enregistrer en mémoire la valeur de la température de consigne Tc affichée par l'utilisateur et, au cours de chaque cycle, de comparer la valeur de la température de consigne durant ce cycle à la valeur enregistrée. Si les deux valeurs sont identiques, le déroulement des opérations représentées en figure 3 n'est pas modifié. Si les valeurs sont différentes, c'est-à-dire lorsque le cycle se déroule immédiatement après l'affichage d'une nouvelle température de consigne par l'utilisateur, la différence entre les deux valeurs de consigne est prise en compte et un second signal de commande est calculé à partir de cette différence, pour être ajouté au signal de commande S1.

On peut ainsi accélérer ou ralentir la régulation de la température, selon que la nouvelle valeur de consigne affichée par l'utilisateur est plus éloignée ou plus proche de la valeur de la température interne dans l'habitacle.

Les valeurs de V1 et S1 peuvent être calculées à partir de formules mathématiques ou bien être déterminées au moyen de tables de valeurs enregistrées au préalable dans la mémoire du microprocesseur, par exemple de telle sorte que les variations de température dans l'habitacle soient ressenties de façon agréable par une personne.

Bien entendu, l'invention est applicable à tous les types de moyens de réglage de la température de l'air amené dans un espace déterminé ou un habitacle de véhicule automobile, ainsi qu'aux installations de chauffage ou de climatisation d'un espace par circulation d'un fluide, autre que l'air, à température réglable.

## Revendications

1. Procédé de régulation de la température dans un espace déterminé, en particulier dans l'habitacle d'un véhicule automobile, qui est chauffé ou climatisé par amenée d'air à température réglable, la température de cet air étant définie par un moyen de réglage (20, 22) recevant un signal (S1) de commande déterminé à partir de la température interne Ti dudit espace ou habitacle et d'une température de consigne Tc devant régner dans cet espace ou habitacle, procédé dans lequel, au cours d'un intervalle de temps prédéterminé,

- on mesure la température interne Ti dans ledit espace,
- on calcule la différence entre la température de consigne Tc et la température interne Ti.
- on calcule la variation réelle V2 de la température dans ledit espace depuis l'intervalle de temps précédent, par la différence Ti-Tip,
- on définit à partir de cette variation, le signal (S1) de commande du moyen de réglage de la température de l'air amené dans ledit espace et on applique ce signal (S1) au moyen de réglage,
- et on répète ces opérations lorsque ledit intervalle de temps est écoulé, caractérisé en ce que :
- on définit, à partir de la différence Ti-Tc et au moyen d'une loi de variation prédéterminée de la température, la variation souhaitable V1 de la température durant ledit intervalle de temps,

- on mesure la différence V1-V2,
- et on utilise cette différence pour établir, à l'aide d'une loi prédéterminée, le signal (S1) de commande qui représente le sens et la grandeur de l'action à exercer sur le moyen de réglage.

2. Procédé selon la revendication 1, caractérisé en ce que le signal (S1) de commande est un nombre entier, qui peut être positif, négatif ou nul, de signaux électriques impulsionnels ou d'unités de temps représentant la durée d'un signal électrique de tension déterminée.

3. Procédé selon la revendication 1 ou 2, caractérisé en ce qu'on détermine la température interne Ti en mesurant la température interne dans ledit espace plusieurs fois de suite pendant une fraction de l'intervalle de temps prédéterminé, et en calculant la valeur moyenne des températures mesurées pendant cette fraction d'intervalles de temps.

4. Procédé selon l'une des revendications précédentes, caractérisé en ce que. le moyen de réglage (20, 22) étant déplaçable dans un sens et dans l'autre entre deux positions limites, on détermine son arrivée dans l'une des positions limites et on donne une valeur nulle au signal de commande (S1) lorsque celui-ci aurait pour effet d'entraîner le moyen de réglage (20, 22) au-delà de ladite position limite.

5. Procédé selon l'ensemble des revendications 2 et 4, caractérisé en ce qu'on détermine l'arrivée du moyen de réglage (20, 22) dans une position limite par comptage et addition de nombres entiers représentant les signaux de commande (S1) appliqués successivement à ce moyen de réglage et par comparaison de leur total à un nombre entier prédéterminé correspondant à la course du moyen de réglage entre ses positions limites.

6. Procédé selon l'une des revendications précédentes, caractérisé en ce que, dans le cas d'une modification de la valeur de consigne Tc de la température, on détermine la différence entre la nouvelle et l'ancienne valeur de la température de consigne, on détermine à partir de cette différence un second signal de commande du moyen de réglage et on l'ajoute au signal de commande (S1) précité.

7. Dispositif pour la régulation de la température dans un espace déterminé, en particulier dans l'habitacle d'un véhicule automobile, comprenant un moyen de réglage (20, 22) recevant un signal (S1) de commande déterminé à partir de la température interne Ti dudit espace et d'une température de consigne Tc devant régner dans celui-ci, et comprenant :

- des moyens (14) pour mesurer la température interne Ti dans ledit espace,
- des moyens (10) pour calculer la différence entre la température de consigne Tc et la température interne Ti,
- des moyens pour calculer la variation réelle V2 entre deux valeurs successives de la température Ti,
- des moyens pour établir le signal (S1) de commande à partir de cette variation et pour l'appliquer au moyen de réglage,

- et des moyens d'initialisation périodique des moyens de calcul, caractérisé en ce qu'il comprend également :

- des moyens pour définir, à partir de la différence Ti-Tc et au moyen d'une loi de variation prédéterminée de la température, la variation souhaitable V1 de la température entre deux mesures successives,

- et des moyens pour mesurer la différence V1-V2, cette différence étant utilisée par les moyens pour établir le signal de commande de façon à établir, à l'aide d'une loi prédéterminée, un tel signal représentant le sens et la grandeur de l'action à exercer sur le moyen de réglage.

8. Dispositif selon la revendication 7, caractérisé en ce qu'il comprend également des moyens de comptage et de totalisation des nombres entiers représentant les signaux de commande (S1) successifs et de comparaison de leur total à un nombre entier prédéterminé.

9. Dispositif selon la revendication 7 ou 8, caractérisé en ce qu'il comprend des moyens d'enregistrement de la valeur de température de consigne Tc et de comparaison à la valeur de la température de consigne enregistrée précédemment, des moyens de calcul d'un second signal de commande en fonction de la différence entre lesdites valeurs enregistrées des températures de consigne et des moyens d'addition du second signal de commande au signal de commande (S1) précédent.

10. Dispositif selon l'une des revendications 7 à 9, caractérisé en ce que lesdits moyens de calcul, de comptage, d'addition et d'initialisation sont constitués par un microprocesseur (26).

**Claims**

1. A method of regulating the temperature in a given space, in particular in the cabin of a motor vehicle, which space is heated or air-conditioned by injecting air at an adjustable temperature, the temperature of said air being defined by adjustment means (20, 22) receiving a control signal (S1) determined from the internal temperature Ti of said space or cabin and from a reference temperature Tc which ought to exist in said space or cabin, the method being a method wherein, during a predetermined time interval :

- the internal temperature Ti of said space is measured ;

- the difference between the reference temperature Tc and the internal temperature Ti is calculated ;

- the real variation V2 of the temperature in said space since the preceding time interval is calculated by the difference Ti-Tip ;

- the control signal (S1) for the adjustment means for adjusting the temperature of the air injected into said space is defined on the basis of said variation, and said signal (S1) is applied to the adjustment means ; and

- these operations are repeated when said time interval has elapsed ;

- the method being characterized in that :

- the desirable variation V1 of the temperature during said time interval is defined on the basis of the difference Ti-Tc and by means of a predetermined temperature variation law ;

- the difference V1-V2 is measured ; and

- this difference is used in conjunction with a predetermined law to establish the control signal (S1) which represents the direction and the magnitude of the action to be exerted on the adjustment means.

2. A method according to claim 1, characterized in that the control signal (S1) is an integer number which may be positive, negative, or zero, of electric pulse signals or of time units representing the duration of an electrical signal of determined voltage.

3. A method according to claim 1 or 2, characterized in that the internal temperature Ti is determined by measuring the internal temperature in said space several times in succession during a fraction of the predetermined time interval, and in calculating the average value of the temperatures measured during said fraction of the time interval.

4. A method according to any preceding claim, characterized in that, the adjustment means (20, 22) being displaceable in one direction or the other between two limit positions, its arrival in one of the limit positions is determined and a zero value is given to the control signal (S1) when the control signal would have the effect of driving the adjustment means (20, 22) beyond said limit position.

5. A method according to claims 2 and 4 taken together, characterized in that the arrival of the adjustment means (20, 22) in a limit position is determined by counting and adding the integer numbers representative of the control signals (S1) successively applied to said adjustment means, and by comparing the total with a predetermined integer number corresponding to the stroke of the adjustment means between its limit positions.

6. A method according to any preceding claim, characterized in that in the event of the value of the reference temperature Tc being changed, the difference between the new and the old reference temperature values is determined, and a second control signal for controlling the adjustment means is determined on the basis of this difference and is added to the above-mentioned control signal (S1).

7. Apparatus for regulating the temperature in a determined space, in particular in the cabin of a motor vehicle, the apparatus comprising adjustment means (20, 22) receiving a control signal (S1) determined from the internal temperature Ti of said space and from a reference temperature Tc which ought to exist therein, the apparatus comprising :

- means (14) for measuring the internal temperature Ti in said space ;

- means (10) for calculating the difference between the reference temperature Tc and the internal temperature Ti ;

- means for calculating the real variation V2 between two successive values of the temperature Ti ;

- means for establishing the control signal (S1) from said variation and for applying it to the adjustment means ; and

- means for periodically initializing the calculating means ;

- the apparatus being characterized in that it also comprises :

- means for defining the desirable variation V1 of the temperature between two successive temperature measurements on the basis of the difference Ti-Tc and by means of a predetermined temperature variation law ; and

- means for measuring the difference V1-V2, said difference being used by the means for establishing the control signal in such a manner as to establish, by means of a predetermined law, such a signal representative of the direction and the magnitude of the action to be exerted on the adjustment means.

8. Apparatus according to claim 7, characterized in that it also includes means for counting and totalizing the integer numbers representing successive control signals (S1) and for comparing the total thereof with a predetermined integer number.

9. Apparatus according to claim 7 or 8, characterized in that it includes means for recording the reference temperature value Tc and for comparing it with the previously recorded reference temperature value, means for calculating a second control signal as a function of the difference between said recorded reference temperature values, and means for adding the second control signal to the preceding control signal (S1).

10. Apparatus according to any one of claims 7 to 9, characterized in that said calculation, counting, adding, and initializing means are constituted by a microprocessor (26).

**Patentansprüche**

1. Verfahren zur Temperaturregelung in einem umgrenzten Raum, insbesondere in Fahrgastraum eines Kraftfahrzeugs, welcher durch Zufuhr von Luft mit regelbarer Temperatur beheizt oder klimatisiert wird, wobei die Temperatur dieser Luft durch eine Regeleinrichtung (20, 22) bestimmt wird, welches mit einem auf der Basis der Innentemperatur Ti des Raums oder Fahrgastraums und der Soll-Temperatur Tc in dem Raum oder Fahrgastraum bestimmten Steuersignal (S1) gespeist ist, und wobei man im Laufe einer vorbestimmten Zeitspanne

- die Innentemperatur Ti des betreffenden Raums mißt,

- die Differenz zwischen der Soll-Temperatur Tc und der Innentemperatur Tc berechnet,

- die effektive Temperaturänderung V2 in dem betreffenden Raum nach Ablauf der voraufgegangenen Zeitspanne auf der Basis der Differenz Ti-Tip berechnet,

- auf der Basis der genannten Änderung das Steuersignal (S1) der Regeleinrichtung für die dem betreffenden Raum zugeführte Luft bestimmt und das Signal (S1) an die Regeleinrichtung anlegt,

- und die genannten Schritte nach Ablauf der genannten Zeitspanne wiederholt.

dadurch gekennzeichnet, daß

- man auf der Basis der Differenz Ti-Tc und mit Hilfe eines vorbestimmten Temperaturänderungsgesetzes die während der genannten Zeitspanne erwünschte Temperaturänderung V1 bestimmt,

- man die Differenz V1-V2 mißt,

- und man die genannte Differenz verwendet, um mit Hilfe eines vorbestimmten Gesetzes das Steuersignal (S1) zu bestimmen, welches die Richtung und Größe der auf die Regeleinrichtung auszuübenden Wirkung beinhaltet.

2. Verfahren nach Anspruch 1, dadurch gekennzeichnet, daß das Steuersignal eine wahlweise positive, negative oder den Wert Null aufweisende ganzzahlige Anzahl von elektrischen Impulssignalen oder Zeiteinheiten beinhaltet, welche die Dauer eines elektrischen Signals einer bestimmten Spannung darstellt.

3. Verfahren nach Anspruch 1 oder 2, dadurch gekennzeichnet, daß man die Innentemperatur Ti bestimmt, indem man die Innentemperatur des genannten Raums während eines Bruchteils der vorbestimmten Zeitspanne mehrere Male nacheinander mißt und den Mittelwert der während dieses Bruchteils der Zeitspanne gemessenen Temperaturen berechnet.

4. Verfahren nach einem der vorstehenden Ansprüche, dadurch gekennzeichnet, daß man angesichts dessen, daß die Regeleinrichtung (20, 22) in der einen und anderen Richtung zwischen zwei Endstellungen verstellbar ist, das Erreichen einer der Endstellungen erfaßt und dem Steuersignal (S1) den Wert Null zuordnet, wenn dieses sonst die Wirkung hätte, die Regeleinrichtung (20, 22) über die genannte Endstellung hinaus zu verstellen.

5. Verfahren nach Ansprüchen 2 und 4, dadurch gekennzeichnet, daß man das Erreichen einer Endstellung der Regeleinrichtung (20, 22) erfaßt, indem man die die nacheinander der Regeleinrichtung zugeführten Steuersignale (S1) darstellenden ganzzahligen Anzahlen zählt und addiert und ihre Summe mit einer vorbestimmten ganzzahligen Zahl wergleicht, welche dem Verstellbereich der Regeleinrichtung zwischen ihren Endstellungen entspricht.

6. Verfahren nach einem der vorstehenden Ansprüche, dadurch gekennzeichnet, daß man im Falle einer Änderung der Soll-Temperatur Tc die Differenz zwischen der neu gewählten und der vorherigen Soll-Temperatur bestimmt, auf der Basis dieser Differenz ein zweites Steuersignal für die Regeleinrichtung bestimmt und es dem vorgenannten Steuersignal (S1) hinzufügt.

7. Vorrichtung zur Temperaturregelung in einem umgrenzten Raum, insbesondere im Fahrgastraum eines Kraftfahrzeugs, mit einer Regeleinrichtung (20, 22), welche mit einem Steuersignal (S1) gespeist ist, welches auf der Basis der Innentemperatur Ti des genannten Raums und einer Soll-Temperatur Tc für diesen bestimmbar ist, sowie mit

- einer Einrichtung (14) zum Messen der Innentemperatur Ti des genannten Raums,

- einer Einrichtung (10) zum Berechnen der Differenz zwischen der Soll-Temperatur Tc und der Innentemperatur Ti,

- einer Einrichtung zum Berechnen der effektiven Änderung V2 zwischen zwei aufeinander folgenden Werten der Temperatur Ti,

- einer·Einrichtung zum Erzeugen des Steuersignals (S1) auf der Basis dieser Änderung und zum Anlegen desselben an die Regeleinrichtung, und

- einer Einrichtung zum periodischen Ingangsetzen der Berechnungseinrichtungen, dadurch gekennzeichnet, daß sie ferner

- eine Einrichtung zum Bestimmen der erwünschten Änderung V1 der Temperatur zwischen zwei aufeinander folgenden Messungen auf der Basis der Differenz Ti-Tc und anhand eines vorbestimmten Temperaturänderungsgesetzes, sowie

- eine Einrichtung zun Messen der Differenz V1-V2 aufweist, wobei diese Differenz durch die Einrichtung zum Erzeugen des Steuersignals verwendet wird, um mit Hilfe eines vorbestimmten Gesetzes ein solches Signal zu erzeugen, welches die Richtung und Größe einer auf die Regeleinrichtung auszuübenden Wirkung angibt.

8. Vorrichtung nach Anspruch 7, dadurch gekennzeichnet, daß sie ferner eine Einrichtung zum Zählen und Summieren von aufeinander folgende Steuersignale (S1) darstellenden ganzzahligen Zahlen und zum Vergleichen von deren Summe mit einer vorbestimmten ganzzahligen Zahl aufweist.

9. Vorrichtung nach Anspruch 7 oder 8, dadurch gekennzeichnet, daß sie eine Einrichtung für die Speicherung des Werts der Soll-Temperatur Tc und zum Vergleichen desselben mit einem vorher gespeicherten Wert der Solltemperatur, eine Einrichtung zum Berechnen eines zweiten Steuersignals auf der Basis der Differenz zwischen den gespeicherten Werten der Soll-Temperatur und eine Einrichtung zum Addieren des zweiten Steuersignals zum ursprünglichen Steuersignal (S1) aufweist.

10. Vorrichtung nach einem der Ansprüche 7 bis 9, dadurch gekennzeichnet, daß die Einrichtungen für das Berechnen, das Zählen, das Addieren und für die Ingangsetzung durch einen Mikroprozessor (26) gebildet sind.

FIG.1

FIG.2

0 177 404

$$\underline{\mathsf{FIG.3}}$$